Europäisches Patentamt

European Patent Office

Office européen des brevets

(11) Veröffentlichungsnummer: **0 219 632**
**B1**

(12) **EUROPÄISCHE PATENTSCHRIFT**

(45) Veröffentlichungstag der Patentschrift:
14.03.90

(51) Int. Cl.⁴: **B60R 7/04**

(21) Anmeldenummer: **86111008.8**

(22) Anmeldetag: **09.08.86**

(54) Ablagekasten mit Stauraum.

(30) Priorität: 25.09.85 DE 3534098

(43) Veröffentlichungstag der Anmeldung:
29.04.87 Patentblatt 87/18

(45) Bekanntmachung des Hinweises auf die Patenterteilung:
14.03.90 Patentblatt 90/11

(84) Benannte Vertragsstaaten:
DE FR GB IT NL SE

(56) Entgegenhaltungen:
DE-A- 2 935 966
DE-A- 3 245 394
DE-U- 1 977 799
FR-A- 880 384
GB-A- 2 054 480
US-A- 3 870 210

(73) Patentinhaber: MAN Nutzfahrzeuge Aktiengesellschaft,
Dachauer Strasse 667 Postfach 50 06 20,
D-8000 München 50(DE)

(72) Erfinder: Schmidt, Werner, Vogelloh 56,
D-8000 München 50(DE)
Erfinder: Watzek, Gerhard, Eduard Spranger Strasse 34,
D-8000 München 45(DE)
Erfinder: Pappers, Rudolf, Merianstrasse 30c,
D-8000 München 19(DE)

## Beschreibung

Die Erfindung betrifft einen Ablagekasten mit Stauraum, insbesondere für Lastkraftwagen, der auf dem Tunnel zwischen Fahrer- und Beifahrersitz anbringbar ist.

Es ist mit DE 29 24 979 ein Ablagekasten bekannt, der einen einzigen Stauraum aufweist und eine gegenüber seiner Randeinfassung hochgezogene Rückwand, an der mittels Scharnier ein schalenförmig ausgebildeter Deckel befestigt ist. Der Deckel ist aus einer auf dem Stauraum aufliegenden Lage um 180° in eine höhere Ebene schwenkbar, wobei er in seiner ersten, unteren Position mit seiner schalenförmigen Ausbildung nach oben weist, während nach Schwenkung die Unterseite in ihrer ebenen Ausgestaltung als Gebrauchslage zur Anwendung kommt. Die bekannte Einrichtung hat, wie schon erwähnt, nur einen einzigen Stauraum, der niedrig ausgebildet und in der Aufnahme von Gegenständen sowohl hinsichtlich der Menge wie auch der Abmessungen sehr begrenzt ist. Die Schale des Deckels läßt keine sinnvolle Verwendung zu, wird ihr Inhalt doch beim Schwenken schlicht ausgekippt. Auch die Schwenkung des Deckels mit relativ großem Schwenkradius erscheint nicht sehr praxisnah, erfordert doch der Schwenkbeginn ein Untergreifen der Grifföffnung und die weiterführende Abwärtsbewegung auf dem Kulminationspunkt ein Umgreifen der Grifföffnung, anderenfalls man den Deckel mit einer akrobatischen Armverrenkung in seine obere Endlage bringen müßte. Dieser nach ergonometrischen Gesichtspunkten etwas komplizierte Verstellvorgang, der auch noch einen großen Bewegungshub des Bedieners erfordert, kann nicht gerade als bedienungsfreundlich empfunden werden und ist, insbesondere bei Fahrbetrieb, unzumutbar.

Der Erfindung liegt die Aufgabe zugrunde, einen Ablagekasten zu schaffen, der größere Möglichkeiten zur Unterbringung von Gegenständen, auch solchen größerer Abmessung sowie vielfältige Verwendungsmöglichkeiten eines oder mehrerer Deckelteile mit ergonometrisch günstigen Verstelleinrichtungen gestattet.

Dies wird erfindungsgemäß dadurch erreicht, daß der Ablagekasten mindestens zwei Stauräume aufweist, die durch einen Deckel wahlweise verschließbar sind. Die Anordnung von zwei Stauräumen hat einmal den Vorzug, daß man größere Mengen unterbringen kann, zum anderen kann man zweckmäßigerweise unterschiedliche Kategorien von Gegenständen trennen, so z. B. in einem Stauraum Schreibunterlagen jeder Art, in dem anderen Getränke oder Nahrungsmittel. Nach einer Ausbildungsart ist der Ablagekasten 2-teilig ausgebildet und besteht aus einem Grundkasten und einem vorzugsweise höheren Beistellkasten, und es ist jedem Kasten ein Stauraum zugeordnet, wobei in einer ersten Ausstattung der Grundkasten allein anbringbar und bei Bedarf ggf. um den Beistellkasten erweiterbar ist. Es ergibt sich aus dieser Anordnung der Vorteil, daß die erfindungsgemäße Einrichtung variierbar und auch im nachhinein erweiterbar ist. Hierbei kann der Grundkasten zur Ablage von kleineren Gebrauchsgütern wie z. B. Schreibutensilien, der Beistellkasten hingegen zur Aufbewahrung von größeren Gegenständen wie Flaschen und dergleichen verwendet werden. So könnte der Beistellkasten auch in einer Ausführungsart als Kühlbox ausgelegt sein. Nach einer anderen Ausbildung kann der Ablagekasten auch einstückig gestaltet sein. Dies ist dann eine besonders kostengünstige Ausführung.

Nach einem wesentlichen Merkmal der Erfindung sind die im nachfolgenden aufgezeigten Deckel in ihren verschiedenen Varianten in unterschiedliche Gebrauchslagen über die verschiedenen Stauräume der beiden Kästen bringbar. Solcherart können die Stauräume wahlweise verschlossen werden und die Deckel entsprechend ihrer jeweiligen Gebrauchslage verschiedenen Zwecken dienen, so z.B., wie auch weiteren Ansprüchen detailliert entnehmbar, als Tisch mit Randbegrenzung oder als Schreibtisch.

Nach einem weiteren äußerst wichtigen Merkmal der Erfindung weisen einige Ausführungsformen der Deckel einen weiteren Stauraum auf. Es wird hierbei betont, daß es sich bei drei Ausführungsformen des Deckels um einen in dieselben integrierten, echten Stauraum handelt, der nicht in Lageverkehrung mittels Kippen oder Drehen, wie es bei der bekannten Ablage der Fall ist, seinen Sinn verliert. Vielmehr können in praktischer Ergänzung der Tischfunktion des Deckels hier Kleingegenstände wie z. B. Tassen oder Besteck untergebracht werden, die damit in direktem Zugriff liegen.

Eine besonders vorteilhafte, die Erfindung im Kern kennzeichnende Ausführungsform ist darin zu sehen, daß der Deckel mittels einer kombinierten, translatorisch-rotatorischen Bewegung aus seiner ersten Gebrauchslage über dem Stauraum des Grundkastens in eine zweite Gebrauchslage über dem Stauraum des Beistellkastens bewegbar ist.

Solcherart ist der Deckel mit unveränderter Deckelstauraumlage durch eine leicht schiebende Handbewegung von der Gebrauchslage über dem Stauraum des Grundkastens in die Gebrauchslage über dem Stauraum des Beistellkastens bringbar. Der Fahrer oder der Beifahrer kann diese Lagenveränderung mit geringem Bewegungsaufwand vollziehen, ohne daß seine Aufmerksamkeit vom Straßenverkehr abgelenkt ist, wie es bei einer Deckeldrehbewegung mit relativ großem Schwenkradius zweifellos der Fall ist. Nach einer zweckmäßigen Ausbildung sind die Auflageflächen an den Kästen als Schrägflächen ausgebildet, und es weisen die Unterseiten des Deckels entsprechende Schrägen auf. Dies ermöglicht eine elegante Überführung des Deckels von einer Position in die andere.

Nach einem weiteren Merkmal sind zur sicheren Führung des Deckels oberhalb der seitlichen Ränder der Kästen, Führungsleisten vorgesehen. Diese Leisten nehmen Seitenkräfte auf, verhindern somit unnötige Belastungen auf die Lenker und erhöhen die Lebensdauer des Ablagekastens.

In Ergänzung des vorhergehenden Merkmals sind die Führungsleisten entsprechend der Bahn des bewegten Deckels zur Mitte hin gewölbt ausgebildet. Auf diese Weise werden während der gesamten Bewegungsgefahr des Deckels die Seitenkräfte abgefangen.

In besonders vorteilhafter Ausgestaltung der Erfindung ist der Deckelantrieb als Parallelogrammlenkergetriebe ausgebildet. Diese Ausführungsform ist die einfachste Umsetzung einer kombiniert rotatorisch-translatorischen Bewegung als praktische Vorrichtung und wird mit einfachen, kostengünstigen Mitteln erzielt.

Nach einem anderen Merkmal der Erfindung ist der Deckel mittels des Parallelogrammlenkergetriebes aus einer unteren Position in eine längsversetzte, obere Position bewegbar, wobei sich die obere Endposition der Lenker jenseits der Vertikalen befindet. Solcherart wird neben der unteren, schwerkraftbedingten Gebrauchslage des Deckels auch eine gleichermaßen, sichere obere Gebrauchslage aufgrund der kinematischen Nutzung der Übervertikalstellung der Lenker erzielt.

Gemäß einer weiteren Ausgestaltung befinden sich die unteren Anlenkpunkte der Lenker am Beistellkasten und die oberen am Deckel oder aber die unteren Anlenkpunkte am Grundkasten und die oberen wiederum am Deckel. Die vorteilhafte Anordnung gestattet die wahlweise einzelne oder kombinierte Aufstellung von Grund- und Beistellkasten, wie auch die nachträgliche Nachrüstung. Einem sehr wesentlichen Merkmal der Erfindung zufolge ist der Stauraum des Deckels mittels einer losen, in ihm einliegenden Verschlußplatte verschließbar und die Platte, höhenbeweglich, in zwei unterschiedliche Gebrauchslagen bringbar. Die Verschlußplatte erfüllt zwei Funktionen, einmal schließt sie den Deckelstauraum, der damit einen echten, abgeschlossenen Behälter darstellt, zum anderen dient sie als Auflage für Gebrauchsgegenstände. Dadurch, daß die Verschlußplatte lose angeordnet ist, ist der Deckelstauraum jederzeit leicht zugänglich, dadurch, daß sie, höhenbeweglich, zwei unterschiedliche Gebrauchslagen einnehmen kann, ist sie für verschiedene Zwecke nutzbar.

In weiterer Ausgestaltung des vorhergehenden Merkmals ist mit der unteren, sich über den Grundkasten erstreckenden Gebrauchslage des Deckels eine untere Gebrauchslage der Verschlußplatte mit einer Randbegrenzung durch den oberen Teil der Wände des Deckelstauraumes und mit der oberen, sich über den Beistellkasten erstreckenden Gebrauchslage des Deckels eine obere Gebrauchslage der nunmehr mit den Rändern der Deckelwände bündig liegenden Platte verbunden. Die Anordnung bewirkt, daß die untere Gebrauchslage des Deckels einen Tisch mit Rand anbietet, der es z. B. gestattet, eine Tasse aufzusetzen, ohne daß diese durch Fahrzeugbewegungen über die Tischkante kippen könnte, andererseits zeigt der Deckel in seiner oberen Gebrauchslage die Verschlußplatte mit seinen Rändern bündig liegend, so daß hier eine Schreibtischanordnung gegeben ist. Vorteilhafterweise weist die Verschlußplatte einen eine Ausnehmung des vorderen Deckelrandes durchgreifenden Hebel zum Anheben der Verschlußplatte auf. Dies ermöglicht, auch während der Fahrt, ein leichtes Öffnen des Deckelstauraumes und Zugriff in denselben. Nach einem bedeutenden Merkmal der Erfindung ist die Verschlußplatte mittels, mit den oberen Gelenkbolzen der Lenker festverbundenen Exzenterhebeln, die innenseitig des Deckels angeordnet sind, automatisch, den Gebrauchslagen des Deckels entsprechend, von der unteren in die obere Gebrauchslage bringbar. Mittels dieser Maßnahme ist der Automatikcharakter zur Erzielung der unterschiedlichen Gebrauchslagen der Verschlußplatte entsprechend ihrer höhenmäßigen Anordnung gewährleistet, ohne daß ein zusätzlicher Mechanismus eingeführt werden müßte.

Gemäß einer anderen erfinderischen Anordnung weist der Ablagekasten nur ein einziges Hebelpaar auf, wobei ein Hebeldrehpunkt an einem der beiden Kästen und der andere am Deckel, vorzugsweise im Schwerpunkt desselben, angeordnet ist und der Deckel über eine labile Bewegungsphase von einer definierten Gebrauchslage in eine andere definierte Gebrauchslage bringbar ist. Dieser Deckelantrieb ist mit nur einem Hebelpaar billiger und erzielt ebenfalls zwei definierte Gebrauchslagen, wobei allerdings in der Bewegungsphase der Deckel von Hand geführt werden muß, um eine Schaukelbewegung zu vermeiden. Einer anderen Variante der Erfindung entsprechend, ist der Deckel mittels einer Verschiebebewegung aus einer ersten Gebrauchslage über dem Stauraum des Grundkastens in eine zweite Gebrauchslage über dem Stauraum des Beistellkastens bewegbar. Auch dies ist eine Realisierungsmöglichkeit der Neuerung, bei der der Deckel mittels leichten Handdruckes über eine eindeutige Führungsbahn, vorzugsweise über eine schiefe Ebene, in unterschiedliche (Höhen)lagen gebracht werden kann. In Ergänzung dieses Merkmals sind für die Schiebebewegung Gleitflächen an der Deckelunterseite und an den seitlichen Rändern der Kästen vorgesehen, und es nimmt der Deckel auf den Schrägen seine Endstellungen (Gebrauchslagen) ein. Dies ermöglicht eine leichte Längsverschieblichkeit des Deckels bei definierten Endlagen, wie nachstehend detailliert ausgeführt ist.

In spezieller Ausgestaltung des vorstehenden Merkmals ist der Deckel mittels ihm, vorzugsweise einstückig verbundenen Leisten in Nuten von Führungsleisten geführt, wobei die Nuten am unteren Ende der Führungsleisten geschlossen sind und die Leisten am oberen Ende federnde Elemente aufweisen, die in Nuten der Leisten einliegen und die Rückwand des Beistellkastens hintergreifen. Solcherart wird eine eindeutige seitliche Führung bewirkt, wie auch ein Aufstellen des Deckels verhindert wird. Des weiteren ist es vorgegeben, unter Zuhilfenahme eines einfachen Federelementes die obere Lagefixierung des Deckels zu erreichen.

Schließlich ist nach einer letzten Ausführungsform der Deckel mittels einer Drehbewegung von einer unteren, über den Stauraum des Grundkastens sich erstreckenden Gebrauchslage in eine obere, über den Stauraum des Beistellkastens sich erstreckende Gebrauchslage bewegbar. Auf diese Weise ergibt sich eine besonders einfache und preisgünstige Variante der Erfindung, wobei die Drehbewegung über ein am Deckel und am vorderen Randteil des Beistellkastens befestigten Scharnier erfolgt.

Nach einem Merkmal der Erfindung ist der Deckel schalenförmig ausgebildet und verschließt in der ersten Gebrauchslage den Grundkasten konvex und in seiner zweiten um 180° verschwenkten Gebrauchslage den Beistellkasten konkav. So erhält man in der unteren Gebrauchslage die Ablagemöglichkeit einer Schale und in der oberen eine Schreibtischfunktion. Nach einer besonderen Ausbildungsform sind die höhengleichen Randteile des Grundkastens um die Höhe des Deckels niedriger als das vordere Randteil des Beistellkastens und dieses wiederum um die lichte Deckeltiefe niedriger als das hintere Randteil und es greifen die seitlichen Randteile des Deckels über die sich von dem Niveau des höheren hinteren auf das Niveau des niedrigeren vorderen Randteils sich verjüngenden seitlichen Randteile des Beistellkastens. Diese Anordnung und Ausbildung von Grundkasten, Beistellkasten und Deckel gestattet es, daß der Deckel in seinen Gebrauchslagen unterschiedlich hohe Ebenen abschließt und seine Deckfläche in der unteren Gebrauchslage Schale und in der oberen Gebrauchslage Tischplatte wird.

Nach einem erfinderischen Merkmal ist zwischen Deckel und Beistellkasten einerseits und zwischen Deckel und Grundkasten andererseits je ein Rastverschluß angeordnet. Solcherart wird vermieden, daß der Deckel durch Fahrzeugvibrationen und Erschütterungen unerwünschte Bewegungen macht. Einer Ausgestaltung der Erfindung entsprechend sind der Grundkasten und der Beistellkasten in ihrer zweiteiligen Ausführung miteinander verriegelbar. Diese Merkmal gilt für alle Ausführungsarten und soll Grund- und Beistellkasten einheitlich verbinden, so daß sie sich während der Fahrt nicht gegeneinander verschieben können.

Weitere Vorteile und Merkmale der Erfindung sind den Ansprüchen, der nachfolgenden Beschreibung und den Zeichnungen entnehmbar.

Die Erfindung ist in vier Ausführungsbeispielen dargestellt:

Es zeigt:

Fig. 1 einen Ablagekasten mit Parallelogrammlenkern in der Vorderansicht

Fig. 2 einen Ablagekasten mit Parallelogrammlenkern in der Seitenansicht

Fig. 3 einen Ablagekasten mit einem Lenkerpaar in Vorderansicht

Fig. 4 einen Ablagekasten mit längsverschieblichem Deckel in der Vorderansicht

Fig. 5 einen Ablagekasten mit längsverschieblichem Deckel in der halben Seitenansicht

Fig. 6 einen Ablagekasten mit schwenkbarem Deckel in der Vorderansicht

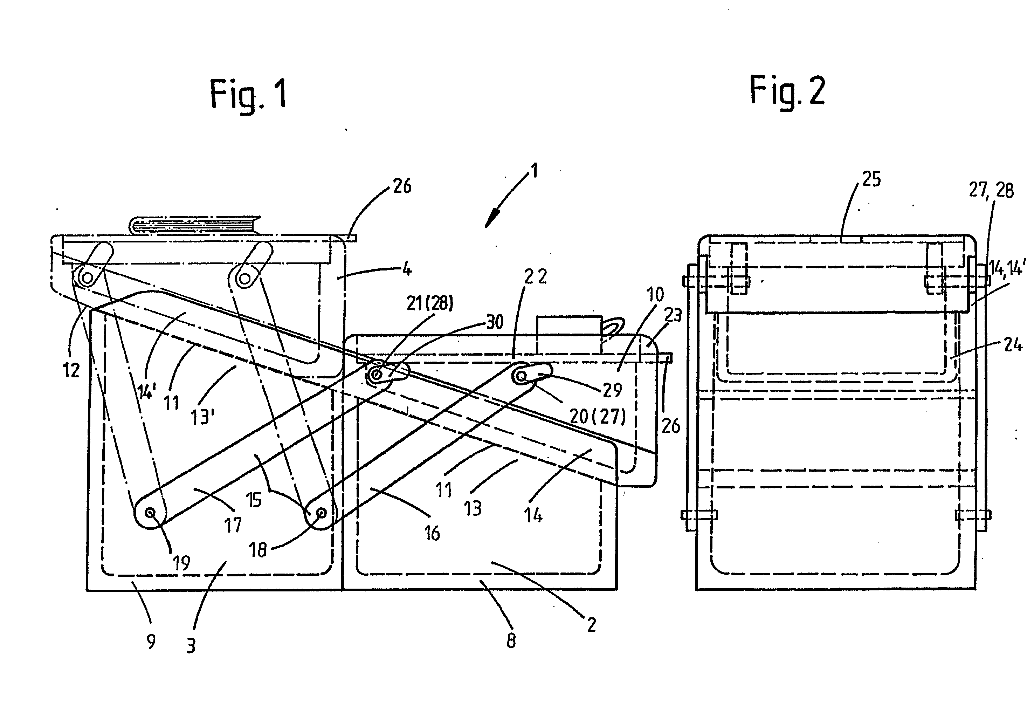

Fig. 1 und Fig. 2 zeigen einen Ablagekasten 1, der im wesentlichen aus einem Grundkasten 8 mit einem Stauraum 2, einem Beistellkasten 9 mit einem Stauraum 3 und einem Deckel 4 mit einem Stauraum 10 besteht. Die Kästen 8, 9 weisen an ihren oberen seitlichen Rändern 13, 13' Auflageflächen 11 auf, auf denen die in gleicher Schräge ausgebildeten Unterseiten 12 des Deckels 4 zur Auflage kommen. 14 und 14' sind Führungsleisten oberhalb der seitlichen Ränder 13, 13' der Kästen 8, 9, in denen der Deckel 4 gegen seitliche Auslenkung geführt ist. Der Deckel 4 ist mittels eines Parallelogrammlenkergetriebes 15 von einer unteren in eine obere Gebrauchslage bewegbar, wobei in der oberen Gebrauchslage die Lenker 16 und 17 eine über die Vertikale hinausgehende Stellung aufweisen, wodurch eine definierte Endlage für den Deckel erzielt wird. Selbstverständlich können die Gebrauchslagen noch durch eine Federraste gegen Vibrationen und Erschütterungen gesichert werden. Die Lenker 16, 17 haben ihre unteren Anlenkpunkte 18, 19 an der Basis des Beistellkastens 9 und ihre oberen Anlenkpunkte 20, 21 am Deckel 4. Der Stauraum 10 des Deckels 4 ist mit einer Verschlußplatte 22 verschlossen, die in der untereren Gebrauchslage des Deckels in den Stauraum eingelassen und von Randbegrenzung 23 der Wände 24 eingefaßt ist, während sie in der oberen Gebrauchslage mit der Randbegrenzung bündig abschließt. Die Vorderseite der Randbegrenzung 23 weist eine Ausnehmung 25 auf, die von einem einstückig mit der Verschlußplatte 22 verbundenen Hebel 26 durchgriffen wird. In den oberen Gelenkpunkten 20, 21 sind die Gelenkbolzen 27, 28 angeordnet. Diese ragen in den Stauraum 10 des Deckels 4 hinein und sind fest mit Exzenterhebeln 29, 30 verbunden, wie sie auch fest mit den Lenkern 16, 17 verbunden und in den Deckelwänden 24 drehbar gelagert sind.

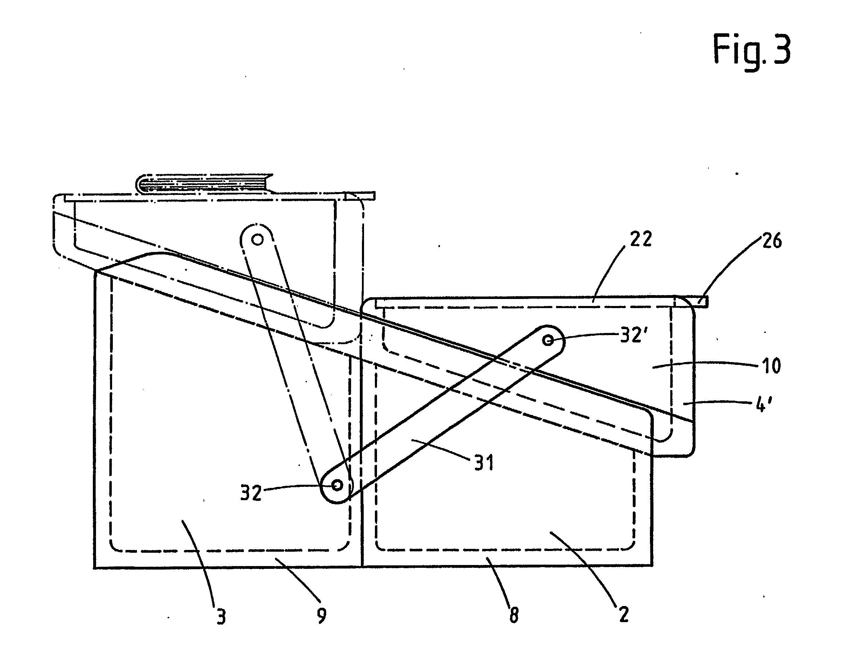

Fig. 3 zeigt eine zweite Ausführungsform der Erfindung. Hier ist zwischen Beistellkasten 9 und Deckel 4' nur ein Hebelpaar 31 mit den Drehpunkten 32 und 32' angeordnet. Diese Ausführung weist auch zwei definierte Endlagen aus, hat jedoch eine instabile Bewegungsphase.

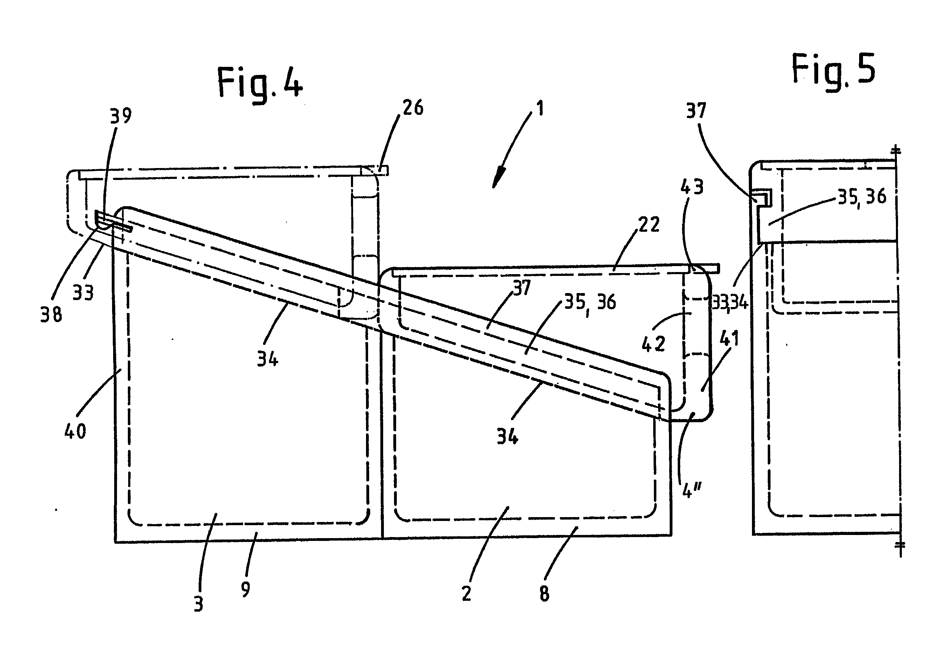

Die Figuren 4 und 5 zeigen eine dritte Ausführungsart der Erfindung. Der Deckel 4" weist schräge Gleitflächen 33 auf, mittels derer der Deckel auf den ebenfalls schrägen Gleitflächen 34 der Kästen 8 und 9 von einer unteren Gebrauchslage über dem Grundkasten in eine obere Gebrauchslage über dem Beistellkasten geschoben werden kann. Der Deckel 4" ist mittels Leisten 35 in Nuten 36 der mit den Kästen 8, 9 vorzugsweise einstückig verbundenen Führungsleisten 37 geführt. Die Leisten 35 weisen an ihren oberen Enden kleine Nuten 39 auf, in denen Federn 38 einliegen, die die Rückwand 40 des Beistellkastens 9 arretierend hintergreifen. Die in der Führungsleiste befindliche Nut 36 ist oben zum Einschieben des Deckels 4" offen und unten zur Lagefixierung des Deckels in seiner unteren Gebrauchslage stirnseitig geschlossen, wobei an der Stirnwand die Leiste 35 des Deckels 4" zur Anlage kommt. In der Vorderwand 41 des Deckels befindet sich eine Grifföffnung 42 zum Schieben und Ziehen desselben. Die Ränder 43 schließen bündig mit der Verschlußplatte 22 ab.

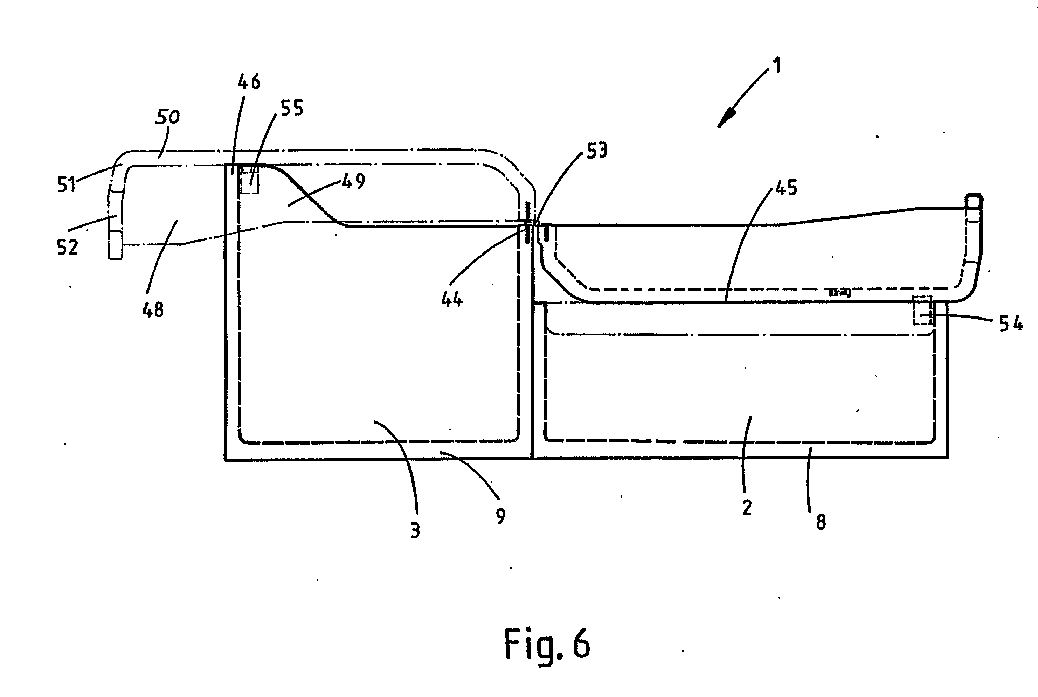

Fig. 6 zeigt ein letztes Ausführungsbeispiel der Erfindung mit einem Deckel 4''', der mittels eines Scharniers 53, das einerends auf dem inneren Randteil 45 des Deckels und anderenends auf dem vorderen Randteil 44 des Beistellkastens 9 befestigt ist, drehbar gelagert ist. Der Deckel 4''' verschließt in einer ersten Gebrauchslage den Grundkasten 8 und in einer zweiten Gebrauchslage den
Beistellkasten 9, wobei der Boden des schalenförmigen Deckels auf dem höheren, hinteren Randteil 46
aufliegt, Die seitlichen Randteile 48 des Deckels 4'''
übergreifen die seitlichen Randteile 49 des Beistellkastens 9. Der Deckel ragt mit einem Überstand 50
über die hintere Rückwand 48 des Beistellkastens 9
hinaus. Das Randteil 51 des Deckels hat eine Grifföffnung 52. Rastverschlüsse 54 und 55 fixieren
den Deckel 4''' in seinen Endlagen.

Bezugszeichenliste

1 Ablagekasten
2 Stauraum
3 Stauraum
4,4',4",4''' Deckel
5 -
6 -
7 -
8 Grundkasten
9 Beistellkasten
10 Stauraum von 4,4',4"
11 Auflageflächen von 8, 9
12 Unterseiten von 4
13 Unterseiten von 4
13, 13' seitliche Ränder von 8, 9
14, 14' Führungsleisten
15 Parallelogrammlenkergetriebe
16 Lenker von 15
17 Lenker von 15
18 unterer Anlenkpunkt von 16
19 unterer Anlenkpunkt von 17
20 oberer Anlenkpunkt von 16
21 oberer Anlenkpunkt von 17
22 Verschlußplatte
23 Randbegrenzung
24 Wände von 10
25 Ausnehmung in 24 von 4,4',4"
26 Hebel von 22
27 Gelenkbolzen
28 Gelenkbolzen
29 Exzenterhebel
30 Exzenterhebel
31 Hebelpaar
32, 32' Hebeldrehpunkte
33 Gleitfläche an 4"
34 Gleitfläche am 8, 9
35 Leisten an 4"
36 Nute in 37 von 8, 9
37 Führungsleisten
38 federnde Elemente
39 Nute in 35
40 Rückwand von 9
41 Vorderwand von 4"
42 Grifföffnung in 41
43 Ränder von 4"
44 vorderes Randteil 9
45 Randteile von 8
46 hinteres Randteil von 9
47 -
48 seitliche Randteile von 4'''
49 seitliche Randteile von 9
50 Überstand von 4'''
51 Randteil von 4'''
52 Grifföffnung an 51
53 Scharnier
54 Rastverschluß
55 Rastverschluß

**Patentansprüche**

1. Ablagekasten mit Stauraum, insbesondere für
Lastkraftwagen, der auf dem Tunnel zwischen Fahrer- und Beifahrersitz anbringbar ist, dadurch gekennzeichnet, daß der Ablagekasten (1) mindestens
zwei Stauräume (2, 3) aufweist, die durch einen
Deckel (4, 4', 4", 4''') wahlweise verschließbar sind.

2. Ablagekasten nach Anspruch 1, dadurch gekennzeichnet, daß der Ablagekasten (1) 2-teilig ausgebildet ist und aus einem Grundkasten (8) und einem vorzugsweise höheren Beistellkasten (9) besteht, daß jedem Kasten (8, 9) ein Stauraum (2, 3)
zugeordnet ist und daß in einer ersten Ausstattung
der Grundkasten (8) allein anbringbar und bei Bedarf ggf. um den Beistellkasten (9) erweiterbar ist.

3. Ablagekasten nach Anspruch 1, dadurch gekennzeichnet, daß der Ablagekasten (1) mit den beiden Stauräumen (2, 3) einstückig ausgebildet ist.

4. Ablagekasten nach den Ansprüchen 1 bis 3,
dadurch gekennzeichnet, daß der Deckel (4, 4', 4",
4''') in unterschiedliche Gebrauchslagen über die
verschiedenen Stauräume (2, 3) bewegbar ist.

5. Ablagekasten nach einem oder mehreren der
Ansprüche 1 bis 4, dadurch gekennzeichnet, daß
der Deckel (4, 4', 4") einen Stauraum (10) aufweist.

6. Ablagekasten nach einem oder mehreren der
Ansprüche 1 bis 5, dadurch gekennzeichnet, daß
der Deckel (4) mittels einer kombinierten translatorisch-rotatorischen Bewegung aus einer ersten Gebrauchslage über dem Stauraum (2) des Grundkastens (8) in eine zweite Gebrauchslage über dem
Stauraum (3) des Beistellkastens (9) bewegbar ist.

7. Ablagekasten nach einem oder mehreren der
Ansprüche 1 bis 6, dadurch gekennzeichnet, daß
die Auflageflächen (11) an den Kästen (8, 9) als
Schrägflächen ausgebildet sind und die Unterseiten
(12) des Deckels (4) entsprechende Schrägen aufweisen.

8. Ablagekasten nach den Ansprüchen 6 und 7,
dadurch gekennzeichnet, daß zur sicheren Führung des Deckels (4) oberhalb der seitlichen Ränder (13, 13') der Kästen (8, 9) Führungsleisten (14,
14') vorgesehen sind.

9. Ablagekasten nach Anspruch 8, dadurch gekennzeichnet, daß die Führungsleisten (14, 14') entsprechend der Bahn des bewegten Deckels (4) zur
Mitte gewölbt ausgebildet sind.

10. Ablagekasten nach Anspruch 6, dadurch gekennzeichnet, daß der Deckelantrieb als Parallelogrammlenkergetriebe (15) ausgebildet ist.

11. Ablagekasten nach einem oder mehreren der
Ansprüche 6 bis 10, dadurch gekennzeichnet, daß
der Deckel (4) mittels des Parallelogrammlenkergetriebes (15) aus einer unteren Position in eine längsversetzte, obere Position bewegbar ist, wobei sich
die obere Endposition der Lenker (16, 17) jenseits
der Vertikalen befindet.

12. Ablagekasten nach den Ansprüchen 10 und 11, dadurch gekennzeichnet, daß sich die unteren Anlenkpunkte (18, 19) der Lenker (16, 17) am Beistellkasten (9) und die oberen (20, 21) am Deckel (4) befinden.

13. Ablagekasten nach den Ansprüchen 10 und 11, dadurch gekennzeichnet, daß sich die unteren Anlenkpunkte (18, 19) der Lenker (16, 17) am Grundkasten (8) und die oberen (20, 21) am Deckel (4) befinden.

14. Ablagekasten nach einem oder mehreren der Ansprüche 1 bis 13, dadurch gekennzeichnet, daß der Stauraum (10) des Deckels (4) mittels einer losen, in ihm einliegenden Verschlußplatte (22) verschließbar ist und die Platte, höhenbeweglich, in zwei unterschiedliche Gebrauchslagen bringbar ist.

15. Ablagekasten nach Anspruch 14, dadurch gekennzeichnet, daß mit der unteren, sich über den Grundkasten (8) erstreckenden Gebrauchslage des Deckels (4) eine untere Gebrauchslage der Verschlußplatte (22) mit einer Randbegrenzung (23) durch den oberen Teil der Wände (24) des Deckelstauraumes (10) und mit der oberen, sich über den Beistellkasten (9) erstreckenden Gebrauchslage des Deckels (4) eine obere Gebrauchslage der nunmehr mit den Rändern der Deckelwände bündig liegenden Platte (22) verbunden ist.

16. Ablagekasten nach den Ansprüchen 14 und 15, dadurch gekennzeichnet, daß die Verschlußplatte (22) einen eine Ausnehmung (25) des vorderen Deckelrandes durchgreifenden Hebel (26) zum Anheben der Verschlußplatte (22) aufweist.

17. Ablagekasten nach einem oder mehreren der Ansprüche 6 bis 16, dadurch gekennzeichnet, daß die Verschlußplatte (22) mittels, mit den oberen Gelenkbolzen (27, 28) der Lenker (16, 17) fest verbundener Exzenterhebel (29, 30), die innenseitig des Deckels (4) angeordnet sind, automatisch, den Gebrauchslagen des Deckels (4) entsprechend, von der unteren in die obere Gebrauchslage bringbar ist.

18. Ablagekasten nach einem oder mehreren der Ansprüche 1 bis 5, dadurch gekennzeichnet, daß die Ablage nur ein einziges Hebelpaar (31) aufweist, wobei ein Hebeldrehpunkt (32) an einem der beiden Kästen (8, 9) und der andere (32') am Deckel (4'), vorzugsweise im Schwerpunkt desselben, angeordnet ist und der Deckel (4') über eine labile Bewegungsphase von einer definierten Gebrauchslage in eine andere definierte Gebrauchslage bringbar ist.

19. Ablagekasten nach einem oder mehreren der Ansprüche 1 bis 5, dadurch gekennzeichnet, daß der Deckel (4") mittels einer Verschiebebewegung aus einer ersten Gebrauchslage über dem Stauraum (2) des Grundkastens (8) in eine zweite Gebrauchslage über dem Stauraum (3) des Beistellkastens (9) bewegbar ist.

20. Ablagekasten nach Anspruch 19, dadurch gekennzeichnet, daß für die Schiebebewegung Gleitflächen (33, 34) an der Deckelunterseite und an den seitlichen Rändern der Kästen (8, 9) vorgesehen sind und der Deckel (4") auf den Schrägen seine Endstellungen (Gebrauchslagen) einnimmt.

21. Ablagekasten nach den Ansprüchen 19 und 20, dadurch gekennzeichnet, daß der Deckel (4") mittels mit ihm, vorzugsweise einstückig verbundenen Leisten (35) in Nuten (36) von Führungsleisten (37) geführt ist, wobei die Nuten (36) am unteren Ende der Führungsleisten (37) geschlossen sind und die Leisten (35) am oberen Ende federnde Elemente (38) aufweisen, die in Nuten (39) der Leisten einliegen und die Rückwand (40) des Beistellkastens (9) hintergreifen.

22. Ablagekasten nach einem oder mehreren der Ansprüche 19 bis 20, dadurch gekennzeichnet, daß der Deckel (4") an seiner Vorderwand (41) eine Grifföffnung (42) aufweist.

23. Ablagekasten nach einem oder mehreren der Ansprüche 19 bis 22, dadurch gekennzeichnet, daß der Deckel (4") eine Verschlußplatte (22) aufweist, die lose in dem Stauraum (10) einliegt und mit dessen Rändern (43) bündig abschließt.

24. Ablagekasten nach einem oder mehreren der Ansprüche 1 bis 4, dadurch gekennzeichnet, daß der Deckel (4''') mittels einer Drehbewegung von einer unteren, über den Stauraum des Grundkastens sich erstreckenden Gebrauchslage in eine obere, über den Stauraum des Beistellkastens sich erstreckende Gebrauchslage bewegbar ist.

25. Ablagekasten nach Anspruch 24, dadurch gekennzeichnet, daß der Deckel (4''') ein Scharnier (53) aufweist, das anderenends auf dem vorderen Randteil (44) des Beistellkastens (9) befestigt ist.

26. Ablagekasten nach den Ansprüchen 24 und 25, dadurch gekennzeichnet, daß der Deckel (4''') schalenförmig ausgebildet ist und in der ersten Gebrauchslage den Grundkasten (8) konvex und in einer zweiten um 180° verschwenkten Gebrauchslage den Beistellkasten (9) konkav verschließt.

27. Ablagekasten nach einem oder mehreren der Ansprüche 24 bis 26, dadurch gekennzeichnet, daß die höhengleichen Randteile (45) des Grundkastens (8) um die Höhe des Deckels (4''') niedriger sind als das hintere Randteil (44) des Beistellkastens (9) und dieses wiederum um die lichte Deckeltiefe niedriger ist als das vordere Randteil (46) und daß die seitlichen Randteile (48) des Deckels (4''') über die von dem Niveau des höheren vorderen auf das Niveau des hinteren niedrigen Randteiles sich verjüngenden seitlichen Randteile (49) des Beistellkastens (9) greifen.

28. Ablagekasten nach einem oder mehreren der Ansprüche 24 bis 27, dadurch gekennzeichnet, daß der Deckel (4''') einen Überstand (50) über das vordere Randteil (46) des Beistellkastens (9) aufweist.

29. Ablagekasten nach einem oder mehreren der Ansprüche 24 bis 28, dadurch gekennzeichnet, daß das Randteil (51) des Deckels (4''') eine Grifföffnung (52) aufweist.

30. Ablagekasten nach einem oder mehreren der Ansprüche 24 bis 28, dadurch gekennzeichnet, daß das den Beistellkasten (9) und den Deckel (4''') verbindende Scharnier (53) als einstückiges Filmscharnier aus Kunststoff mit einer als Knickstelle verdünnten Zone ausgebildet ist.

31. Ablagekasten nach einem oder mehreren der Ansprüche 24 bis 30, dadurch gekennzeichnet, daß zwischen Deckel (4''') und Beistellkasten (9) einerseits und zwischen Deckel (4''') und Grundkasten (8) andererseits je ein Rastverschluß (54, 55) angeordnet ist.

32. Ablagekasten nach einem oder mehreren der Ansprüche 1 bis 31, dadurch gekennzeichnet, daß Grund- (8) und Beistellkasten (9) aus Kunststoffen wie z. B. Harzschaum, Thermoplast oder Polyester hergestellt sind.

33. Ablagekasten nach einem oder mehreren der Ansprüche 1 bis 32, dadurch gekennzeichnet, daß der Grundkasten (8) und der Beistellkasten (9) in ihrer 2-teiligen Ausführung miteinander verriegelbar sind.

**Claims**

1. A deposit box with a storage compartment, in particular for lorries, which can be arranged on the tunnel between the driver seat and the passenger seat, characterised in that the deposit box (1) has at least two storage compartments (2, 3) which can be selectively closed by a lid (4, 4', 4", 4"").

2. A deposit box according to Claim 1, characterised in that the deposit box (1) is constructed in two parts and comprises a main box (8) and a preferably higher auxiliary box (9); in that each box (8, 9) has a storage compartment (2, 3), and in that the main box (8) alone may be arranged initially, and if required may be extended by the auxiliary box (9).

3. A deposit box according to Claim 1, characterised in that the deposit box (1) is constructed in one piece with the two storage compartments (2, 3).

4. A deposit box according to Claims 1 to 3, characterised in that the lid (4, 4', 4", 4"") is movable over the different storage compartments (2, 3) into various positions of use.

5. A deposit box according to one or more of Claims 1 to 4, characterised in that the lid (4, 4', 4") has a storage compartment (10).

6. A deposit box according to one or more of Claims 1 to 5, characterised in that the lid (4) is movable by means of a combined translatory-rotary movement from a first position of use above the storage compartment (2) of the main box (8) into a second position of use above the storage compartment (3) of the auxiliary box (9).

7. A deposit box according to one or more of Claims 1 to 6, characterised in that the contact faces (11) on the boxes (8, 9) are constructed as oblique faces and the undersides (12) of the lid (4) have corresponding slopes.

8. A deposit box according to Claims 6 and 7, characterised in that guide strips (14, 14') are provided above the lateral edges (13, 13') of the boxes (8, 9) for secure guiding of the lid (4).

9. A deposit box according to Claim 8, characterised in that the guide strips (14, 14') are designed so as to be arched towards the centre, corresponding to the path of the moved lid (4).

10. A deposit box according to Claim 6, characterised in that the lid drive is constructed as a parallelogram linkage mechanism (15).

11. A deposit box according to one or more of Claims 6 to 10, characterised in that the lid (4) is movable by means of the parallelogram linkage mechanism (15) out of a lower position into a longitudinally shifted upper position, the upper end-position of the linkage arms (16, 17) being beyond the vertical.

12. A deposit box according to Claims 10 and 11, characterised in that the lower link points (18, 19) of the linkage arms (16, 17) are on the auxiliary box (9) and the upper link points (20, 21) are on the lid (4).

13. A deposit box according to Claims 10 and 11, characterised in that the lower link points (18, 19) of the linkage arms (16, 17) are on the main box (8) and the upper link points (20, 21) are on the lid (4).

14. A deposit box according to one or more of Claims 1 to 13, characterised in that the storage compartment (10) of the lid (4) is closable by means of a loose closing plate (22) lying therein, and the plate, movable in height, can be brought into two different positions of use.

15. A deposit box according to Claim 14, characterised in that a lower position of use of the closing plate (22), with an edge limitation (23) by the upper part of the walls (24) of the lid storage compartment (10), is combined with the lower position of use of the lid (4) extending over the main box (8), and an upper position of use of the plate (22) – which is now lying flush with the edges of the lid walls – is combined with the upper position of use of the lid (4) extending over the auxiliary box (9).

16. A deposit box according to Claims 14 and 15, characterised in that the closing plate (22) has a lever (26) engaging through a recess (25) of the front lid edge, for lifting the closing plate (22).

17. A deposit box according to one or more of Claims 6 to 16, characterised in that the closing plate (22), by means of excentric levers (29, 30) firmly connected with the upper hinge pins (27, 28) of the linkage arms (16, 17), which levers are arranged on the inside of the lid (4), can automatically be brought from the lower into the upper position of use, corresponding to the positions of use of the lid (4).

18. A deposit box according to one or more of Claims 1 to 5, characterised in that the place of deposit has only one pair of levers (31), one lever fulcrum (32) being arranged on one of the two boxes (8, 9) and the other (32') on the lid (4'), preferably in the centre of gravity thereof, and the lid (4') being movable via an unstable position from one defined position of use into another defined position of use.

19. A deposit box according to one or more of Claims 1 to 5, characterised in that the lid (4") is movable by means of a displacement movement from a first position of use above the storage compartment (2) of the main box (8) into a second position of use above the storage compartment (3) of the auxiliary box (9).

20. A deposit box according to Claim 19, characterised in that slide surfaces (33, 34) for the sliding movement are provided on the underside of the lid and on the lateral edges of the boxes (8, 9), and the lid (4") takes up its end-positions (positions of use) on the inclined surfaces.

21. A deposit box according to Claims 19 and 20, characterised in that the lid (4"), by means of strips (35) joined therewith preferably in one piece, is guided in grooves (36) of guide strips (37), the grooves (36) being closed at the lower end of the guide strips (37) and the strips (35) having at the upper end resilient elements (38) which lie in grooves (39) of the strips and grip behind the rear wall (40) of the auxiliary box (9).

22. A deposit box according to one or more of Claims 19 to 20, characterised in that the lid (4") has a handle opening (42) in its front wall (41).

23. A deposit box according to one or more of Claims 19 to 22, characterised in that the lid (4") has a closing plate (22) which lies loosely in the storage compartment (10) and closes flush with its edges (43).

24. A deposit box according to one or more of Claims 1 to 4, characterised in that the lid (4''') is movable by means of a rotary movement from a lower position of use extending over the storage compartment of the main box into an upper position of use extending over the storage compartment of the auxiliary box.

25. A deposit box according to Claim 24, characterised in that the lid (4''') has a hinge (53) which with the other end is fastened on the front edge part (44) of the auxiliary box (9).

26. A deposit box according to Claims 24 and 25, characterised in that the lid (4''') is constructed in the shape of a bowl and in the first position of use closes the main box (8) in a convex manner and in a second position of use – swivelled about 180° – closes the auxiliary box (9) in a concave manner.

27. A deposit box according to one or more of Claims 24 to 26, characterised in that the edge parts (45) – which are of equal height – of the main box (8) are lower by the height of the lid (4''') than the rear edge part (44) of the auxiliary box (9) and the rear edge part is in its turn lower by the clear depth of the lid than the front edge part (46), and in that the lateral edge parts (48) of the lid (4''') engage over the lateral edge parts (49) of the auxiliary box (9) which taper from the level of the higher front edge part to the level of the lower rear edge part.

28. A deposit box according to one or more of Claims 24 to 27, characterised in that the lid (4''') has a projection (50) over the front edge part (46) of the auxiliary box (9).

29. A deposit box according to one or more of Claims 24 to 28, characterised in that the edge part (51) of the lid (4''') has a handle opening (52).

30. A deposit box according to one or more of Claims 24 to 28, characterised in that the hinge (53) joining the auxiliary box (9) and the lid (4''') is constructed as a one-piece film hinge made of synthetic material with an area which is thinned to form a bending point.

31. A deposit box according to one or more of Claims 24 to 30, characterised in that two notch closures (54, 55) are provided, one between the lid (4''') and the auxiliary box (9) and the other between the lid (4''') and the main box (8).

32. A deposit box according to one or more of Claims 1 to 31, characterised in that the main box (8) and the auxiliary box (9) are manufactured from synthetic materials such as foam resin, thermoplastic or polyester.

33. A deposit box according to one or more of Claims 1 to 32, characterised in that the main box (8) and the auxiliary box (9) can be bolted together when constructed in two parts.

## Revendications

1°) Casier comportant une cavité de rangement notamment pour camion, destiné à être fixé sur le tunnel séparant le poste du conducteur de celui du passager, casier caractérisé en ce qu'il (1) comporte au moins deux cavités de rangement (2, 3) qui peuvent être fermées sélectivement par un couvercle (4, 4', 4", 4''').

2°) Casier selon la revendication 1, caractérisé en ce que le casier (1) est en deux parties comprenant un casier de base (8) et un casier complémentaire (9) de préférence plus haut et à chaque casier (8, 9) est associée une cavité de rangement (2, 3) et en ce que, selon un premier mode de réalisation, le casier de base (8) se monte seul et est complété le cas échéant par le casier complémentaire (9).

3°) Casier selon la revendication 1, caractérisé en ce que le casier (1) fait corps avec les deux cavités de rangement (2, 3).

4°) Casier selon l'une des revendications 1 à 3, caractérisé en ce que le couvercle (4, 4', 4", 4''') peut être déplacé dans des positions d'utilisation différentes au-dessus de différentes cavités de rangement (2, 3).

5°) Casier selon l'une ou plusieurs des revendications 1 à 4, caractérisé en ce que le couvercle (4, 4', 4") comprend une cavité de rangement (10).

6°) Casier selon l'une ou plusieurs des revendications 1 à 5, caractérisé en ce que le couvercle (4) peut passer par un mouvement combiné de translation et de rotation d'une première position d'utilisation au-dessus de la cavité de rangement (2) du casier de base (8) dans une seconde position d'utilisation au-dessus de la cavité de rangement (3) du casier complémentaire (9).

7.) Casier selon l'une ou plusieurs des revendications 1 à 6, caractérisé en ce que les surfaces d'appui (11) des casiers (8, 9) ont des surfaces inclinées et les faces inférieures (12) du couvercle (4) ont des surfaces inclinées correspondantes.

8°) Casier selon les revendications 6 et 7, caractérisé en ce que pour garantir le guidage du couvercle (4) au-dessus des bords latéraux (13, 13') des casiers (8, 9) on a des longerons de guidage (14, 14').

9.) Casier selon la revendication 8, caractérisé en ce que les longerons de guidage (14, 14') sont réalisés de manière bombée vers le milieu selon la trajectoire du couvercle mobile (4).

10°) Casier selon la revendication 6, caractérisé en ce que le moyen d'entraînement du couvercle est une transmission à bras en parallélogramme (15).

11°) Casier selon l'une ou plusieurs des revendications 6 à 10, caractérisé en ce que le couvercle (4) peut être passé par la transmission à bras en parallélogramme (15) d'une position inférieure en une position supérieure décalée longitudinalement et pour la position supérieure de fin de course, les bras (16, 17) se trouvent de l'autre côté de la verticale.

12°) Casier selon les revendications 10 et 11, caractérisé en ce que les points d'articulation inférieurs (18, 19) des bras (16, 17) sont prévus sur le casier complémentaire (9) et les points d'articulation supérieurs (20, 21) sont prévus sur le couvercle (4).

13°) Casier selon les revendications 10 et 11, caractérisé en ce que les points d'articulation inférieurs (18, 19) des bras (16, 17) sont prévus sur le casier de base (8) et les points d'articulation supérieurs (20, 21) sont prévus sur le couvercle (4).

14°) Casier selon l'une ou plusieurs des revendications 1 à 13, caractérisé en ce que la cavité de rangement (10) du couvercle (4) peut être fermée par une plaque de fermeture (22) libre, placée sur celui-ci et cette plaque est mobile en hauteur pour venir dans deux positions d'utilisation différentes.

15°) Casier selon la revendication 14, caractérisé en ce que pour la position d'utilisation inférieure du couvercle (4) qui s'étend sur le casier de base (8), une position d'utilisation inférieure de la plaque de fermeture (22) avec une délimitation par le bord (23) par la partie supérieure de la paroi (24) de la cavité de rangement (10) du couvercle et pour la position d'utilisation supérieure au-dessus du casier complémentaire (9) pour le couvercle (4), la plaque (22) est à fleur avec les bords des parois du couvercle.

16°) Casier selon les revendications 14 et 15, caractérisé en ce que la plaque de fermeture (22) comporte un levier (26) qui traverse une cavité (25) du bord avant du couvercle pour permettre de soulever la plaque de fermeture (22).

17°) Casier selon l'une ou plusieurs des revendications 6 à 16, caractérisé en ce que la plaque de fermeture (22) peut être conduite de sa position d'utilisation inférieure dans sa position d'utilisation supérieure par des leviers à excentrique (29, 30) reliés solidairement aux goujons d'articulation (27, 28) des bras (16, 17), leviers qui sont prévus du côté intérieur du couvercle (4), pour passer automatiquement d'une position d'utilisation à l'autre du couvercle (4).

18°) Casier selon l'une ou plusieurs des revendications 1 à 5, caractérisé en ce que l'appui ne comporte qu'une seule paire de leviers (31) et un point de rotation de levier (32) est prévu sur l'un des deux casiers (8, 9) et l'autre (32') est prévu sur le couvercle (4'), de préférence au centre de gravité de celui-ci et le couvercle (4') peut être conduit par une phase de mouvement simple de l'une des positions d'utilisation, déterminée, dans une autre position d'utilisation, déterminée.

19°) Casier selon l'une ou plusieurs des revendications 1 à 5, caractérisé en ce que le couvercle (4") peut être passé par un mouvement de coulissement d'une première position d'utilisation au-dessus de la cavité de rangement (2) du casier de base (8) dans une seconde position d'utilisation au-dessus de la cavité de rangement (3) du casier complémentaire (9).

20°) Casier selon la revendication 19, caractérisé en ce que pour le mouvement de coulissement on a des surfaces de glissement (32, 34) sur la face inférieure du couvercle et sur les bords latéraux des casiers (8, 9) et le couvercle (4") prend ses positions de fin de course (positions d'utilisation) sur les surfaces inclinées.

21°) Casier selon les revendications 19 et 20, caractérisé en ce que le couvercle (4") est guidé par des longerons (35) qui sont reliés à celui-ci de préférence solidairement, dans des rainures (36) de longerons de guidage (37), les rainures (36) étant fermées à l'extrémité inférieure des longerons de guidage (37) et les longerons (35) comportant à leur extrémité supérieure des éléments à ressort (38) qui viennent dans les rainures (39) des longerons et passent derrière la paroi arrière (40) du casier complémentaire (9).

22°) Casier selon l'une ou plusieurs des revendications 19 à 20, caractérisé en ce que le couvercle (4") présente une ouverture (42) formant poignée dans sa paroi avant (41).

23°) Casier selon l'une ou plusieurs des revendications 19 à 22, caractérisé en ce que le couvercle (4") comporte une plaque de fermeture (22) qui vient librement dans la cavité de rangement (10) et la ferme à fleur avec les bords (43).

24°) Casier selon l'une ou plusieurs des revendications 1 à 4, caractérisé en ce que le couvercle (4''') peut être conduit par un mouvement de rotation, d'une position d'utilisation inférieure au-dessus de la cavité de rangement du casier de base dans une position d'utilisation supérieure qui s'étend au-dessus de la cavité de rangement du casier complémentaire.

25°) Casier selon la revendication 24, caractérisé en ce que le couvercle (4''') comporte une charnière (53) dont l'autre extrémité est fixée sur la paroi de bord avant (44) du casier complémentaire (9).

26°) Casier selon les revendications 24 et 25, caractérisé en ce que le couvercle (4''') est en forme de coupelle et dans sa première position d'utilisation il ferme de manière convexe le casier de base (8) et dans une seconde position d'utilisation basculée de 180° il ferme de manière concave le casier complémentaire (9).

27°) Casier selon l'une ou plusieurs des revendications 24 à 26, caractérisé en ce que les parties de bord (45) de même hauteur du casier de base (8) sont diminuées de la hauteur du couvercle (4''') par rapport à la partie de bord arrière (44) du casier complémentaire (9) et celui-ci est de nouveau diminué de la profondeur libre du couvercle par rapport à la partie avant de bord (46) et en ce que les parties latérales de bord (48) du couvercle (4''') viennent par-dessus les parties latérales (49) de bord du casier complémentaire (9) qui vont en diminuant du niveau de la partie de bord avant au niveau de la partie de bord arrière plus bas.

28°) Casier selon l'une ou plusieurs des revendications 24 à 27, caractérisé en ce que le couvercle (4''') présente un débordement (50) par rapport à la partie avant de bord (46) du casier complémentaire (9).

29°) Casier selon l'une ou plusieurs des revendications 24 à 28, caractérisé en ce que la partie de bord (51) du couvercle (4''') présente une ouverture formant poignée (52).

30°) Casier selon l'une ou plusieurs des revendications 24 à 28, caractérisé en ce que la charnière (53) qui relie le casier complémentaire (9) et le couvercle (4''') est une charnière en forme de film en une seule pièce en matière synthétique avec une zone d'épaisseur diminuée constituant la ligne de pliage.

31°) Casier selon l'une ou plusieurs des revendications 24 à 30, caractérisé en ce qu'entre le couvercle (4''') et le casier complémentaire (9), d'une part, et en ce qu'entre le couvercle (4''') et le casier de base (8), d'autre part, on a chaque fois un moyen de fermeture à encliquetage (54, 55).

32°) Casier selon l'une ou plusieurs des revendications 1 à 31, caractérisé en ce que le casier de base (8) et le casier complémentaire (9) sont réalisés dans des matières synthétiques comme par exemple une mousse expansée, une mousse thermoplastique ou un polyester.

33°) Casier selon l'une ou plusieurs des revendications 1 à 32, caractérisé en ce que le casier de base (8) et le casier complémentaire (9) peuvent être verrouillés l'un à l'autre dans le cas de leur réalisation en deux parties.

Fig. 2

Fig. 1

Fig. 3

EP 0 219 632 B1

Fig. 5

Fig. 4

Fig. 6

EP 0 219 632 B1